# EUROPÄISCHE PATENTANMELDUNG

(11) **EP 2 995 859 A1**
(43) Veröffentlichungstag der Anmeldung: **16.03.2016**
(21) Anmeldenummer: 14184560.2
(22) Anmeldetag: 12.09.2014
(51) Int. Cl.: F23M 5/02, F23R 3/00, G01B 21/08

(54) **Hitzeschildelement für einen Hitzeschild einer Brennkammer**

(71) Anmelder: Siemens Aktiengesellschaft, 80333 München (DE)
(72) Erfinder: Böttcher, Andreas, 40822 Mettmann (DE); Deiss, Olga, 40627 Düsseldorf (DE); Grieb, Thomas, 47802 Krefeld (DE); Kock, Boris Ferdinand, 40878 Ratingen (DE); Krieger, Tobias, 46147 Oberhausen (DE); Lapp, Patrick, 13359 Berlin (DE); Mann, Andreas, 39576 Stendal (DE); Vogtmann, Daniel, 40227 Düsseldorf (DE)

(57) **Zusammenfassung**

Die Erfindung betrifft ein Hitzeschildelement (28, 48, 56) für eine Gasturbine, welches einen keramischen Grundkörper (30, 50) umfasst, dessen Oberfläche eine Heißseite (32), eine gegenüberliegende Kaltseite (34) und die Heißseite mit der Kaltseite verbindende Seitenflächen (36) umfasst, wobei die Heißseite im Betrieb der Gasturbine einem Abtrag unterliegt.

Das erfindungsgemäße Hitzeschildelement ermöglicht eine Erhöhung der Betriebssicherheit der Gasturbine.

Hierzu umfasst der keramische Grundkörper mindestens eine Indikatorschicht (52) zur Verschleißdetektion, wobei die Indikatorschicht von der ursprünglichen Heißseite beabstandet in dem keramischen Grundkörper verläuft und sich zumindest bereichsweise optisch von dem in Richtung Heißseite befindlichen Grundkörpermaterial unterscheidet.

## Beschreibung

Die Erfindung bezieht sich auf einen Hitzeschild, insbesondere zur Anordnung in einer Brennkammer einer Gasturbine. Die Erfindung bezieht sich auch auf einen Hitzeschildelement, welches als Bestandteil des Hitzeschilds verwendbar ist sowie auf eine Brennkammer und eine die Brennkammer umfassende Gasturbine, wobei die Brennkammer zumindest bereichsweise mit einem derartigen Hitzeschild ausgekleidet ist.

In vielen technischen Anwendungen werden Hitzeschilde verwendet, welche Heißgasen von 1000 bis 1600 Grad widerstehen müssen. Insbesondere Gasturbinen, wie sie in stromerzeugenden Kraftwerken und in Flugzeugtriebwerken Verwendung finden, weisen entsprechend große durch Hitzeschilde abzuschirmende Flächen im Innern der Brennkammern auf. Wegen der thermischen Ausdehnung und wegen großer Abmessungen muss das Hitzeschild aus einer Vielzahl einzelner, im Allgemeine keramischer Hitzeschildsteine zusammengesetzt werden, die voneinander mit einem ausreichenden Spalt beabstandet an einer Tragstruktur mittels Halteelementen befestigt sind. Dieser Spalt bietet den Hitzeschildsteinen, die auch mit Hitzeschildelementen bezeichnet werden können, ausreichenden Raum für die thermische Ausdehnung.

Ein gattungsgemäßes Hitzeschildelement umfasst einen keramischen Grundkörper, dessen Oberfläche eine den Heißgasen ausgesetzte Heißseite, eine gegenüberliegende Kaltseite und die Heißseite mit der Kaltseite verbindende Seitenflächen umfasst, wobei die Heißseite im Betrieb der Gasturbine einem Abtrag unterliegt. Der Abtrag wird durch die vorbeiströmenden Heißgase hervorgerufen, die sowohl aufgrund ihrer Temperatur als auch aufgrund ihrer chemischen Zusammensetzung die keramische Oberfläche derartiger Hitzeschildsteine angreifen und abtragen. Die Hitzeschildelemente umfassen im Allgemeinen den keramischen Grundkörper sowie Befestigungselemente, um den keramischen Grundkörper an einer Tragstruktur der Brennkammerwand zu befestigen. Aufgrund des Abtrages der Heißseite des keramischen Grundkörpers ergibt sich eine mechanische Schwächung der Hitzeschildsteine und eine reduzierte Abschirmung der Befestigungselemente und der Tragstruktur durch den keramischen Grundkörper. Aus diesem Grunde müssen die Hitzeschildsteine vorsorglich nach einer bestimmten Anzahl von Betriebsstunden durch neue Steine ersetzt werden.

Der Erfindung liegt die Aufgabe zugrunde, ein Hitzeschildstein und einen Hitzeschild mit mindestens einem derartigen Hitzeschildstein, eine mit einem derartigen Hitzeschild ausgekleidete Brennkammer sowie eine Gasturbine mit einer derartigen Brennkammer anzugeben, mit welchem sich die Betriebssicherheit der Gasturbine erhöhen lässt.

Die Aufgabe wird erfindungsgemäß bei einem Hitzeschildelement der eingangs genannten Art dadurch gelöst, dass der keramische Grundkörper mindestens eine Indikatorschicht zur Verschleißdetektion umfasst, wobei die Indikatorschicht von der ursprünglichen Heißseite beabstandet in dem keramischen Grundkörper verläuft und sich zumindest bereichsweise optisch von dem in Richtung Heißseite befindlichen Grundkörpermaterial unterscheidet.

Bei einem durch den Abtrag bedingten Freilegen der Indikatorschicht ist aufgrund der optisch unterschiedlichen Ausgestaltung eine Höhe des Abtrags durch eine Überwachungseinrichtung oder ein Servicepersonal in einfacher Weise erkennbar. Da der Abtrag der Steine durch die Fahrweise und den verwendeten Brennstoff variieren kann, ist das Vorsehen eines Austausches der Steine in Abhängigkeit von der Freilegung der Indikatorschicht eine wesentlich sichere Methode zur Erkennung eines Austauschbedarfes der Steine als die Vorgabe von Betriebsstunden. Die Stärke des Abtrags der Steine hängt auch mit der Position der Steine in der Brennkammer zusammen und muss zudem nicht gleichförmig entlang der Heißseite erfolgen, so dass ein erfindungsgemäßer Hitzeschildstein bei seinem wirklichen Austauschbedarf diesen mittels der Indikatorschicht anzeigt. Dies erhöht die Betriebssicherheit der Gasturbine und verhindert zudem unnötige Kosten im Service der Gasturbine. Der Abstand zwischen der ursprünglichen Heißseite - also der Heißseite im Neuzustand des Hitzeschildelementes - und dem Beginn der Indikatorschicht ist hierbei in Abhängigkeit der Austauschkriterien und Inspektionsintervalle gewählt. Die Indikatorschicht muss sich nicht über die gesamte Fläche - also bis zu jeder Seitenfläche des Hitzeschildelementes erstrecken. Die Indikatorschicht könnte auch nur in einem mittleren Bereich des keramischen Grundkörpers verlaufen. Bevorzugt verläuft sich aber im Wesentlichen über die gesamte Fläche des keramischen Grundkörpers, beispielsweise parallel zur Heißseite.

Die Tiefe der Indikatorschicht - oder mit anderen Worten der Abstand zwischen der ursprünglichen Heißseite bei der Herstellung des Hitzeschildsteines und der Indikatorschicht - ist dabei so gewählt, dass bei einem Erreichen der Indikatorschicht ein Austauschbedarf des Steines angezeigt wird. Nicht sinnvoll ist es den Beginn der Indikatorschicht an eine Verschleißgrenze kurz vor dem vermutlichen Versagen des Steines zu legen. Die Tiefe kann beispielsweise derart gewählt werden, dass der Austausch im Wesentlichen im Laufe eines Serviceintervalls notwendig sein wird. Die Indikatorschicht kann auch über ihre Höhe mehrschichtig ausgeführt sein, wobei die Schichten sich optisch voneinander unterscheiden und einen baldigen oder einen dringenden Austauschbedarf mittels ihrer unterschiedlichen optischen Erscheinungsweisen anzeigen. Je nach Position der Hitzeschildsteine in dem Hitzeschild können die Steine unterschiedlich ausgebildet sein und unterschiedliche Dicken aufweisen. Mit Dicke der Hitzeschildsteine sei die Höhe der Hitzeschildsteine normal zur Brennkammerwand bezeichnet. Die Anordnung der Indikatorschicht in dem Stein kann auf den jeweiligen Stein und seine gegebenenfalls speziellen Austauschkriterien und Inspektionsintervalle angepasst sein.

Vorteilhafte Ausgestaltungen der Erfindung sind in der nachfolgenden Beschreibung und den Unteransprüchen angegeben, deren Merkmale einzeln und in beliebiger Kombination miteinander angewendet werden können.

Eine vorteilhafte Ausgestaltung der Erfindung kann vorsehen, dass die Indikatorschicht im heißgasseitigen oberen Drittel des ursprünglichen keramischen Grundkörpers beginnt. Handelsübliche Hitzeschildsteine für Gasturbinen können eine Dicke von einigen Zentimetern aufweisen. Die angegebene Tiefe der Indikatorschicht hat sich als besonders vorteilhaft erwiesen, um rechtzeitig einen Austauschbedarf dieser handelsüblichen Hitzeschildsteine anzuzeigen. Der Begriff "ursprüngliche Heißseite" bezieht sich hierbei auf einen Neuzustand des Hitzeschildsteines.

Es kann auch als vorteilhaft angesehen werden, dass der keramische Grundkörper mindestens eine Ausnehmung umfasst, welche zum Eingriff mindestens eines Befestigungsmittels ausgebildet ist, wobei die mindestens eine Ausnehmung in Richtung Kaltseite unterhalb einer ersten Höhe des keramischen Grundkörpers angeordnet ist und die Indikatorschicht in einem Bereich des Grundkörpers beginnt, der sich zwischen der ursprünglichen Heißseite und der ersten Höhe befindet.

Diese Ausgestaltung der Erfindung stellt sicher, dass ein Austauschbedarf des Hitzeschildelementes angezeigt wird, bevor der Abtrag der Hitzeschildsteine die Befestigungselemente einem Heißgasangriff aussetzt.

Eine vorteilhafte Ausgestaltung der Erfindung kann vorsehen, dass die Indikatorschicht im Wesentlichen parallel zur Heißseite in dem keramischen Grundkörper verläuft.

Die Indikatorschicht kann sich in dieser im Wesentlichen konstanten Tiefe über die gesamte Abmessung der Heißseite erstrecken.

Vorteilhafterweise kann weiter vorgesehen sein, dass die Indikatorschicht sich zumindest bereichsweise farblich von dem in Richtung Heißseite befindlichen Grundkörpermaterial unterscheidet.

Bei der Indikatorschicht kann es sich im Wesentlichen um dasselbe keramische Grundkörpermaterial handeln wie das in Richtung Heißseite befindliche Grundkörpermaterial, wobei die Indikatorschicht zusätzliche Farbzusätze umfasst. Bei der Indikatorschicht kann es sich auch um gefärbtes Keramikmaterial handeln. Die Indikatorschicht kann durchgehend die Indikatorfarbe aufweisen oder nur bereichsweise, beispielsweise in Form eines oder mehrere Schriftzüge oder Symbole.

Bevorzugt kann die Indikatorschicht zumindest bereichsweise eine Signalfarbe aufweisen. Die Signalfarbe setzt sich kontrastreich von der Farbe des in Richtung Heißseite vorhandenen Grundkörpermaterials ab. Handelsübliche Hitzeschildsteine für Gasturbinen weisen beispielsweise eine weiße Farbe auf. Als Signalfarbe bietet sich hier beispielweise Rot oder Pink oder Blau an.

Weiter kann vorteilhaft vorgesehen sein, dass die Indikatorschicht zumindest bereichsweise mindestens ein Indikatorobjekt umfasst, wobei sich die Indikatorobjekte optisch von dem oberhalb der Indikatorschicht in Richtung Heißseite befindenden Grundkörpermaterial unterscheiden.

Bei dem mindestens einen Indikatorobjekt kann es sich beispielsweise um in den keramischen Grundkörper eingelassene metallische Objekte handeln. Wesentlich hierbei ist nur, dass diese optisch für ein Servicepersonal oder eine Überwachungsvorrichtung leicht erkennbare Objekte handelt, wobei die Indikatorschicht mit den Objekten auf einer Höhe beginnt, die einen baldigen oder dringenden Austauschbedarf des Hitzeschildelementes anzeigt.

Vorteilhafterweise umfasst die Indikatorschicht mehrere Schichten, wobei die mehreren Schichten sich zumindest bereichsweise optisch voneinander unterscheiden.

Beispielsweise kann der Farbton der mehreren Schichten in Richtung des stärkeren Abtrags kräftiger werden. Die mindestens eine tiefere Schicht kann auch eine andere Farbe aufweisen. Dadurch lässt sich ein baldiger und ein dringender Austauschbedarf bei der Inspektion voneinander unterscheiden.

Eine weitere Aufgabe der Erfindung ist es, ein Hitzeschild für eine Gasturbine mit einer Anzahl an Hitzeschildelementen, welche unter Belassung von Dehnspalten im Wesentlichen flächendeckend und lösbar an einer Tragstruktur der Gasturbine befestigbar sind, anzugeben, mit welchem die Betriebssicherheit der Gasturbine erhöht werden kann.

Hierzu umfasst der Hitzeschild mindestens ein Hitzeschildelement nach einem der Ansprüche 1 bis 9. Bevorzugt weisen im Wesentlichen alle keramischen Hitzeschildsteine des Hitzeschilds eine derartige Indikatorschicht auf.

Eine weitere Aufgabe der Erfindung ist es, eine Brennkammer für eine Gasturbine, welche zum Schutz vor Heißgasen mindestens bereichsweise mit einem Hitzeschild ausgekleidet ist und eine Gasturbine mit mindestens einer derartigen Brennkammer anzugeben, mit welchen die Betriebssicherheit der Gasturbine erhöht ist.

Hierzu ist der Hitzeschild der Brennkammer nach Anspruch 10 und mindestens eine Brennkammer der Gasturbine nach Anspruch 11 ausgebildet.

Eine weitere Aufgabe der Erfindung ist es, eine Wartungsmethode für eine Brennkammer einer Gasturbine anzugeben, welche zum Schutz vor Heißgasen mindestens bereichsweise mit einem Hitzeschild nach Anspruch 10 ausgekleidet ist, mit welcher die Betriebssicherheit der Gasturbine sich erhöhen lässt. Hierzu erfolgt eine Verschleißdetektion mindestens eines nach einem der Ansprüche 1 bis 9 ausgebildeten Hitzeschildelementes anhand der Indikatorschicht. Der Austausch des Hitzeschildelementes erfolgt somit in einem Zustand des Hitzeschildelementes, in welchem der betriebsbedingte Abtrag des Hitzeschildelements die Indikatorschicht mindestens bereichsweise freigelegt hat oder hatte.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

Dabei zeigt
- Fig. 1: schematisch eine Gasturbine nach dem Stand der Technik in einem Längsschnitt,
- Fig. 2: schematisch einen Ausschnitt eines Hitzeschilds nach dem Stand der Technik im Längsschnitt,
- Fig. 3: schematisch ein erfindungsgemäßen Hitzeschildstein nach einem ersten Ausführungsbeispiel in einer Seitenansicht,
- Fig. 4: schematisch eine Seitenansicht des Hitzeschildsteins der Fig. 3 bei Erreichen der Indikatorschicht,
- Fig. 5: schematisch ein erfindungsgemäßen Hitzeschildstein nach einem zweiten Ausführungsbeispiel in einer Seitenansicht,
- Fig. 6: schematisch den Hitzeschildstein der Fig. 5 in einem Zustand mit teilweise freigelegter zweiter Indikatorschicht in einer perspektivischen Ansicht, und
- Fig. 7: ein Ablaufdiagramm der Wartungsmethode nach Anspruch 13.

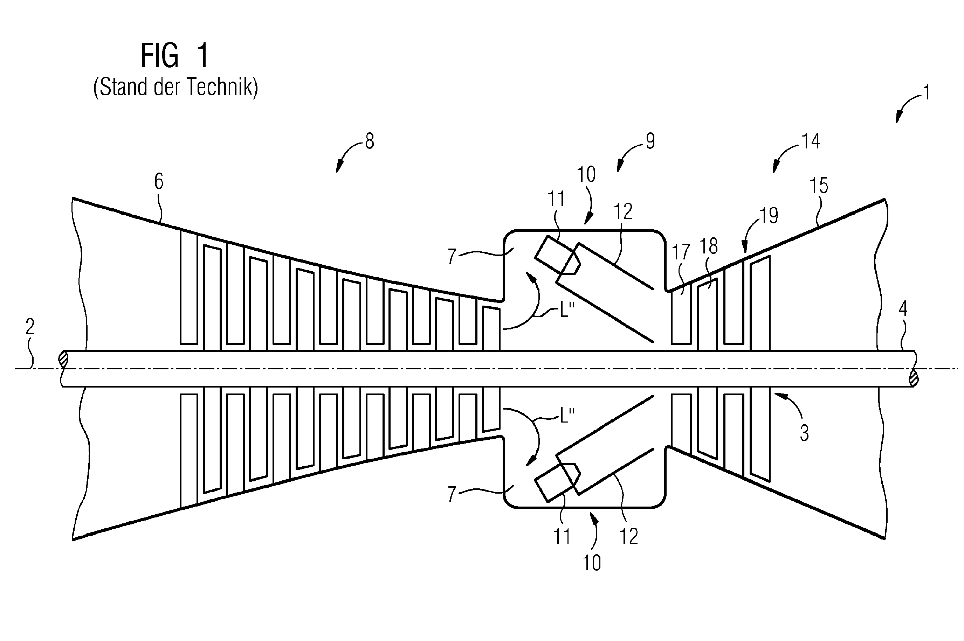

Die Figur 1 zeigt eine Schnittansicht einer Gasturbine 1 nach dem Stand der Technik in schematisch vereinfachter Darstellung. Die Gasturbine 1 weist in ihrem Inneren einen um eine Rotationsachse 2 drehgelagerten Rotor 3 mit einer Welle 4 auf, der auch als Turbinenläufer bezeichnet wird. Entlang des Rotors 3 folgen aufeinander ein Ansauggehäuse 6, ein Verdichter 8, ein Verbrennungssystem 9 mit einer oder mehreren Brennkammern 10, die jeweils eine Brenneranordnung mit Brennern 11, ein Brennstoffversorgungssystem für die Brenner (nicht dargestellt) und ein Gehäuse 12 umfassen, eine Turbine 14 und ein Abgasgehäuse 15. Die Brennkammer 10 kann beispielsweise eine Ringbrennkammer sein. Die Erfindung kann sich aber auch auf Gasturbinen beziehen, die als Turbomaschine mit mehreren Ringbrennkammern ausgebildet ist. Die Erfindung kann sich auch auf Gasturbinen beziehen mit einer oder mehreren Rohr- oder Silobrennkammern. Die Rohrbrennkammern können beispielsweise ringförmig an dem Turbineneintritt angeordnet sein.

Das in Fig. 1 dargestellte Verbrennungssystem 9 kommuniziert mit einem beispielsweise ringförmigen Heißgaskanal. Dort bilden mehrere hintereinander geschaltete Turbinenstufen die Turbine 14. Jede Turbinenstufe ist aus Schaufelringen gebildet. In Strömungsrichtung eines Arbeitsmediums gesehen folgt im Heißkanal einer aus Leitschaufeln 17 gebildeten Reihe eine aus Laufschaufeln 18 gebildete Reihe. Die Leitschaufeln 17 sind dabei an einem Innengehäuse eines Stators 19 befestigt, wohingegen die Laufschaufeln 18 einer Reihe beispielsweise mittels einer Turbinenscheibe am Rotor 3 angebracht sind. An dem Rotor 3 angekoppelt ist beispielsweise ein Generator (nicht dargestellt).

Während des Betriebes der Gasturbine wird vom Verdichter 8 durch das Ansauggehäuse 6 Luft angesaugt und verdichtet. Die am turbinenseitigen Ende des Verdichters 8 bereitgestellte Verdichterluft L" wird entlang eines Brennerplenums 7 zu dem Verbrennungssystem 9 geführt und dort im Bereich der Brenneranordnung in die Brenner 11 geleitet und in diesen mit Brennstoff vermischt und/oder im Austrittsbereich des Brenners 11 mit Brennstoff angereichert. Brennstoffzuführsysteme versorgen die Brenner hierbei mit Brennstoff. Das Gemisch bzw. die Verdichterluft und der Brennstoff werden von den Brennern 11 in die Brennkammer 10 eingeleitet und verbrennen unter Bildung eines heißen Arbeitsgasstromes in einer Verbrennungszone innerhalb des Brennkammergehäuses 12 der Brennkammer. Von dort strömt der Arbeitsgasstrom entlang des Heißgaskanals an den Leitschaufeln 17 und den Laufschaufeln 18 vorbei. An den Laufschaufeln 18 entspannt sich der Arbeitsgasstrom impulsübertragend, so dass die Laufschaufeln 18 den Rotor 3 antreiben und dieser den an ihn angekoppelten Generator (nicht dargestellt).

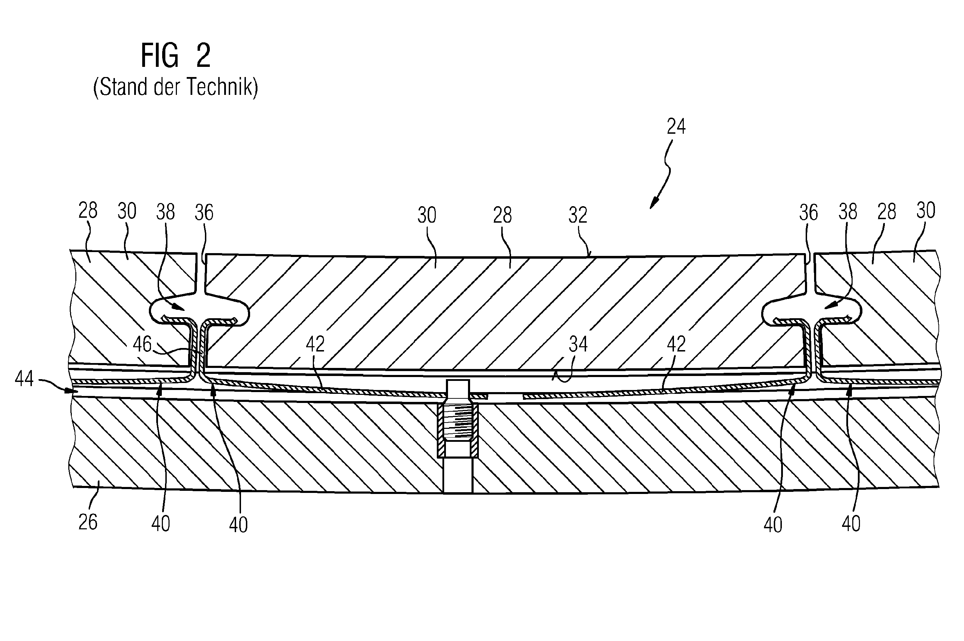

Die Fig. 2 zeigt einen Ausschnitt eines Hitzeschilds 24 mit einer Tragstruktur 26 und einer an der Tragstruktur lösbar befestigten Anzahl an Hitzeschildelemente 28, welche unter Belassung von Dehnspalten flächendeckend an der Tragstruktur angeordnet sind. Die Hitzeschildelemente 28 bestehen aus einem keramischen Grundkörper 30. Der keramische Grundkörper 30 kann im Rahmen dieser Erfindung auch mit keramischem Hitzeschildstein (Ceramic heat shield - CHS) bezeichnet werden. Die keramischen Grundkörper weisen jeweils eine mit Heißgas beaufschlagbare Heißseite 32, eine gegenüberliegende Kaltseite 34 und die Seitenflächen 36 auf, welche die Heißseite mit der Kaltseite verbinden. In den Seitenflächen 36 sind Ausnehmungen 38 angeordnet, welche zum Eingriff mindestens eines Befestigungsmittels ausgebildet sind. Bei dem dargestellten Ausführungsbeispiel können die Ausnehmungen 38 als eine Nut ausgebildet sein, welche parallel zur Heißseite über die jeweilige Seitenfläche 36 verläuft. Das Hitzeschildelement 28 umfasst in diesem Fall an zwei gegenüberliegenden Seitenflächen 36 jeweils eine derartige Nut. Eine alternative Ausgestaltung kann vorsehen, dass der Hitzeschildstein an zwei gegenüberliegenden Seitenflächen je zwei taschenartige Ausnehmungen umfasst, wobei in jede der vier taschenförmigen Ausnehmungen ein Befestigungsmittel eingreift. Die rückfedernd ausgebildeten metallischen Befestigungsmittel 40 sind mit einem Befestigungsabschnitt 42 in einer Befestigungsnut 44 angeordnet und greifen mit einem Halteabschnitt 46 in die als Eingriffseinrichtung ausgebildete Ausnehmung 38 ein, wobei sie den keramischen Grundkörper 30 an die Tragstruktur 26 heranziehen und in dieser Position halten. Die Tragstruktur 26 und die Befestigungsmittel 40 sind durch den keramischen Grundkörper 30 vor einem Heißgasangriff geschützt. Da der keramische Grundkörper 30 an seiner den Heißgasen ausgesetzten Oberfläche, insbesondere an der Heißseite 32, im Betrieb schnell vorbeiströmenden Heißgasen ausgesetzt ist, unterliegt insbesondere die Heißseite des keramischen Grundkörpers 30 einem Abtrag (sogenanntes Absanden der CHS). Um eine Schwächung der keramischen Grundkörper 30 zu verhindern und einen verstärkten Einzug von Heißgas zu den metallischen Befestigungsmitteln 40 zu verhindern, werden die Hitzeschildelemente 28 turnusmäßig inspiziert und anhand von Tauschkriterien bei der Inspektion ausgetauscht. Diese Tauschkriterien richten sich gemäß dem Stand der Technik beispielsweise nach den Betriebsstunden, denen der Stein ausgesetzt war.

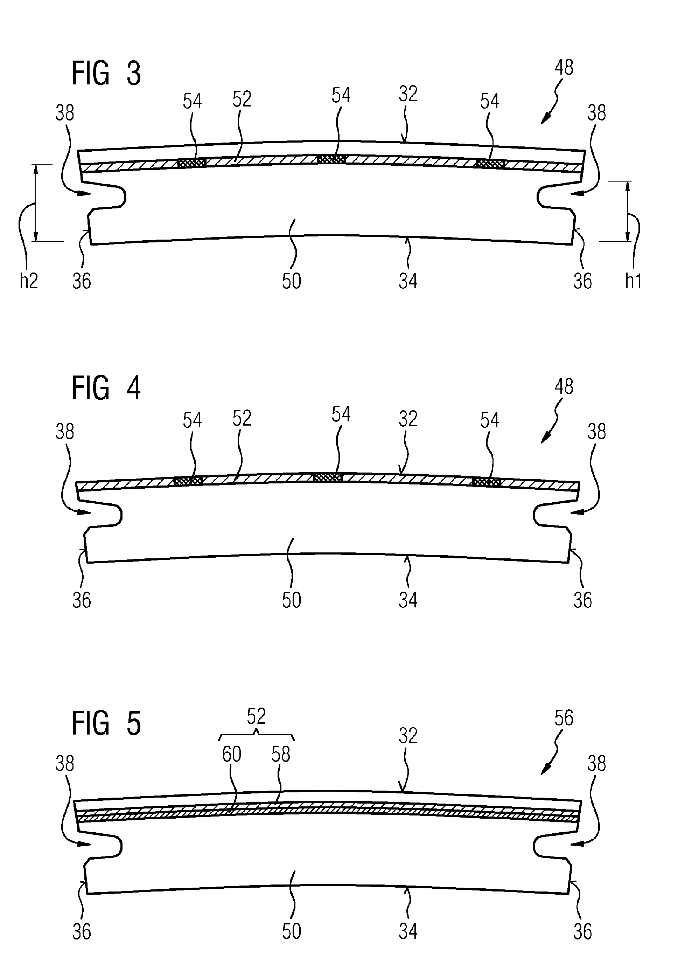

Die Fig. 3 zeigt schematisch einen erfindungsgemäßes Hitzeschildelement 48 in einer Seitenansicht. Das Hitzeschildelement umfasst einen keramischen Grundkörper 50, der eine Indikatorschicht 52 zur Verschleißdetektion umfasst. Der keramische Grundkörper 50 weist eine Oberfläche auf, die eine Heißseite 32 (dargestellt ist der Neuzustand des CHS), eine Kaltseite 34 und Seitenflächen 36 umfasst. Die Indikatorschicht verläuft von der ursprünglichen Heißseite 32 - also der Heißseite im Neuzustand des Hitzeschildelementes 48 - beabstandet in dem keramischen Grundkörper und unterscheidet sich bereichsweise optisch von dem in Richtung Heißseite befindlichen Grundkörpermaterial. Bei dem dargestellten Ausführungsbeispiel besteht die Indikatorschicht aus einem eingefärbten keramischen Material, in welches zusätzlich metallische Indikatorobjekte 54 eingelassen sind. Das keramische Hitzeschildelement kann beispielsweise aus einem fließfähigen Schlicker hergestellt werden, der in eine Form gegossen wird, wobei bei dem Gießprozess nach einfüllen einer ersten Menge des Grundmaterialschlickers in einem Zwischenschritt das Schlickermaterial der Indikatorschicht mit den Indikatorobjekten in die Form gegossen wird und in einem weiteren Schritt mit dem Einfüllen des Grundmaterialschlickers fortgefahren wird. Die Form entzieht dem Schlicker Wasser, so dass vor und nach dem Zwischenschritt durch eine Pause die Oberfläche des bereits eingefüllten Schlickermaterials etwas verfestigt werden kann und die Indikatorschicht bei dem Herstellungsverfahren klar begrenzt bleibt. Der verfestigte Grünling wird anschließend aus der Form entnommen und in einer Vorrichtung bei hohen Temperaturen gesintert. Das erfindungsgemäße keramische Hitzeschildelement kann aber auch mittels anderer Herstellungsverfahren hergestellt werden. Das hier beschriebene Herstellungsverfahren stellt eine Möglichkeit zur Herstellung der Hitzeschildelemente nach einem der Ansprüche 1 bis 9 dar.

Der Abstand zur Heißseite und die Dicke der in dem keramischen Grundkörper eingelassenen Indikatorschicht ist derart gewählt, dass bei Freilegen der Indikatorschicht ein erster Hinweis auf einen Austauschbedarf des Hitzeschildelementes erfolgt. Die Dicke der Indikatorschicht 52 kann sich bis zur Kaltseite 34 erstrecken oder geringer sein. Sie sollte derart gewählt sein, dass bei einem Freilegen der Indikatorschicht der Abtrag bis zur nächsten Inspektion die Indikatorschicht nicht bereits vollständig abgetragen hat. Auch sollte der erste Hinweis auf einen Austauschbedarf derart rechtzeitig erfolgen, dass bis zur nächsten Inspektion nicht bereits die Befestigungselemente einem direkten Heißgasangriff ausgesetzt sind. Aus diesem Grund beginnt wie dargestellt vorzugsweise die Indikatorschicht 52 im heißgasseitigen oberen Drittel des ursprünglichen keramischen Grundkörpers 50. Der Beginn der Indikatorschicht, also die in Richtung Heißseite weisende Grenzfläche der Schicht, befindet sich wie dargestellt auch mit einem ausreichenden Abstand zu den Ausnehmungen 38 in den Seitenflächen 36.

Hierzu ist die mindestens eine Ausnehmung 38 in Richtung Kaltseite 34 unterhalb einer ersten Höhe h1 (Höhe von der Kaltseite aus gemessen) des keramischen Grundkörpers 50 angeordnet und die Indikatorschicht 52 beginnt in einem Bereich des Grundkörpers (hier auf einer Höhe h2), der sich zwischen der ursprünglichen Heißseite 32 und der ersten Höhe h1 befindet.

Die Indikatorschicht 52 verläuft im Wesentlichen parallel zur Heißseite 32 in dem keramischen Grundkörper 50 und unterscheidet sich optisch sowohl farblich von dem in Richtung Heißseite befindlichen Grundkörpermaterial als auch durch die in die Schicht eingelassenen Indikatorobjekte 54. Die Indikatorobjekte können metallische Nägel sein, die sich aufgrund ihres Materials optisch von dem oberhalb der Indikatorschicht in Richtung Heißseite 32 befindenden Grundkörpermaterial unterscheiden.

Die Fig. 4 zeigt das in Fig. 3 dargestellte Hitzeschildelement 48 in einem späteren Zustand, in welchem die Dicke des Hitzeschildelementes 48 durch einen Abtrag der Heißseite 32 bereits reduziert ist. Der Abtrag hat den Beginn der Indikatorschicht 52 erreicht und somit die Indikatorschicht 52 freigelegt. Dadurch wird ein Austauschbedarf des Hitzeschildelements 48 angezeigt. Bei der nächsten Inspektion kann der Austauschbedarf in einer einfachen Art und Weise optisch festgestellt werden.

Die Figur 5 zeigt schematisch eine Seitenansicht eines erfindungsgemäßen Hitzeschildelementes 56 gemäß einem zweiten Ausführungsbeispiels. Das Hitzeschildelement 56 ist in einem Neuzustand dargestellt mit noch nicht abgesandeter Heißseite 32 und unterscheidet sich von dem in Fig. 3 dargestellten Ausführungsbeispiel dadurch, dass die mit einem Abstand zur Heißseite in dem Grundkörper 50 verlaufende Indikatorschicht 52 mehrere Schichten, hier eine erste Schicht 58 und eine zweite Schicht 60 umfasst, wobei die zwei Schichten sich durch ihre Farbe optisch voneinander unterscheiden. Die erste und zweite Schicht unterscheiden sich auch farblich von dem Grundkörpermaterial, welches zwischen der Indikatorschicht 52 und der ursprünglichen Heißseite 32 angeordnet ist. Die Indikatorschicht 52 befindet sich ebenfalls in einem oberen Drittel des Hitzeschildelementes 56.

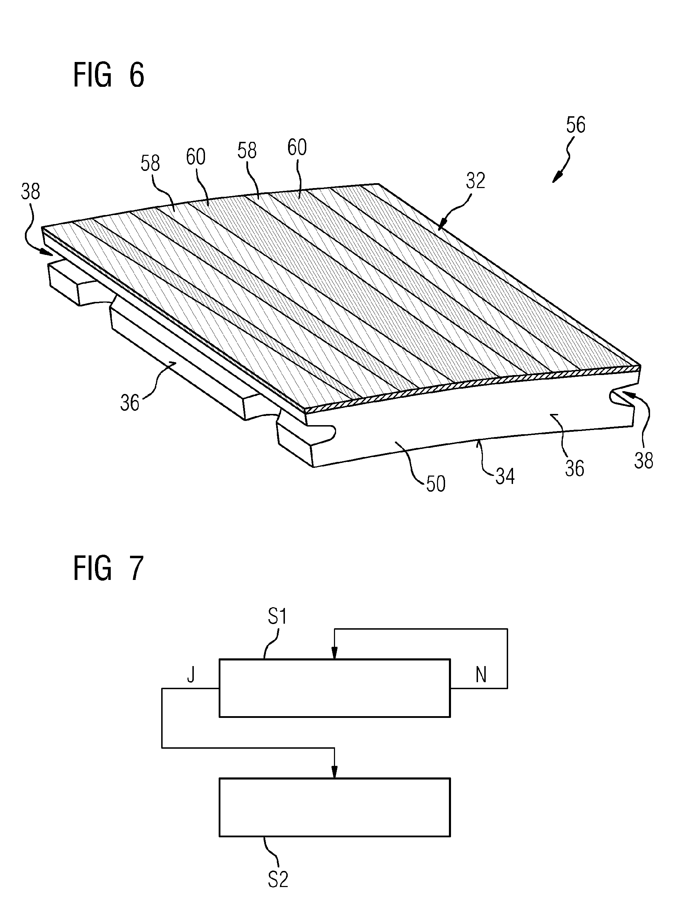

Die Figur 6 zeigt das in Fig. 5 dargestellte Hitzeschildelement 56 in einem späteren Zustand, in welchem die Heißseite 32 bereits soweit abgesandet ist, dass sowohl die erste Schicht 58 freigelegt ist und auch teilweise schon die zweite Schicht 60. Da das Absanden über die Fläche der Heißseite 32 nicht gleichförmig erfolgt, ist die zweite Schicht 60 entlang von sich über die Heißseite erstreckenden Streifen erkennbar, da in diesen Bereichen bereits ein stärkerer Abtrag stattgefunden hat. Die zweite Schicht zeigt bei dem dargestellten Ausführungsbeispiel einen dringenden Austauschbedarf an.

Die Figur 7 zeigt ein Ablaufdiagramm der erfindungsgemäßen Wartungsmethode einer Brennkammer einer Gasturbine, wobei die Brennkammer nach Anspruch 11 ausgebildet ist. Die Brennkammer umfasst ein Hitzeschild, welches eine Anzahl von Hitzeschildelementen aufweist, wobei mindestens ein Hitzeschildelement nach einem der Ansprüche 1 bis 9 ausgebildet ist.

Bei der Wartungsmethode erfolgt der Austausch mindestens eines nach einem der Ansprüche 1 bis 9 ausgebildeten Hitzeschildsteines in einem Zustand des Hitzeschildsteines, in welchem der betriebsbedingte Abtrag des Hitzeschildsteines die Indikatorschicht zumindest bereichsweise freigelegt hat. Hierzu wird bei einer Inspektion Schritt 1 (S1) durchgeführt, bei welchem die Hitzeschildsteine darauf untersucht werden, ob auf der Heißseite zumindest bereichsweise die Indikatorschicht durch den Abtrag freigelegt wurde. Dies kann bevorzugt anhand einer Sichtprüfung erfolgen. Weist ein Hitzeschildelement bereits mindestens bereichsweise eine freigelegte Indikatorschicht auf, wird in Schritt 2 (S2) anhand der Indikatorschicht entschieden, ob ein baldiger oder dringender Austauschbedarf des Steines besteht und der Stein bei dieser Inspektion oder bei einer folgenden Inspektion ausgetauscht wird.

Der Austausch erfolgt dann bei dieser oder bei einer folgenden Inspektion in einem Zustand, in welchem der Abtrag die Indikatorschicht zumindest bereichsweise freigelegt hat. Hierunter fallen auch Zustände, bei denen die Indikatorschicht zumindest bereichsweise schon abgetragen ist.

## Patentansprüche

1. Hitzeschildelement (28,48,56) für eine Gasturbine, welches einen keramischen Grundkörper (30,50) umfasst, dessen Oberfläche eine Heißseite (32), eine gegenüberliegende Kaltseite (34) und die Heißseite mit der Kaltseite verbindende Seitenflächen (36) umfasst, wobei die Heißseite im Betrieb der Gasturbine einem Abtrag unterliegt,
**dadurch gekennzeichnet, dass**
der keramische Grundkörper mindestens eine Indikatorschicht (52) zur Verschleißdetektion umfasst, wobei die Indikatorschicht von der ursprünglichen Heißseite beabstandet in dem keramischen Grundkörper verläuft und sich zumindest bereichsweise optisch von dem in Richtung Heißseite befindlichen Grundkörpermaterial unterscheidet.

2. Hitzeschildelement nach Anspruch 1,
**dadurch gekennzeichnet, dass**
die Indikatorschicht (52) im heißgasseitigen oberen Drittel des ursprünglichen keramischen Grundkörpers (30, 50) beginnt.

3. Hitzeschildelement nach Anspruch 1 oder 2,
**dadurch gekennzeichnet, dass**
der keramische Grundkörper mindestens eine Ausnehmung (38) umfasst, welche zum Eingriff mindestens eines Befestigungsmittels (40) ausgebildet ist, wobei die mindestens eine Ausnehmung in Richtung Kaltseite unterhalb einer ersten Höhe (h1) des keramischen Grundkörpers angeordnet ist und die Indikatorschicht (52) in einem Bereich des Grundkörpers beginnt, der sich zwischen der ursprünglichen Heißseite (32) und der ersten Höhe (h1) befindet.

4. Hitzeschildelement nach einem der Ansprüche 1 bis 3,
**dadurch gekennzeichnet, dass**
die Indikatorschicht im Wesentlichen parallel zur Heißseite in dem keramischen Grundkörper verläuft.

5. Hitzeschildelement nach einem der Ansprüche 1 bis 4,
**dadurch gekennzeichnet, dass**
die Indikatorschicht (52) sich zumindest bereichsweise farblich von dem in Richtung Heißseite (32) befindlichen Grundkörpermaterial unterscheidet.

6. Hitzeschildelement nach Anspruch 5,
**dadurch gekennzeichnet, dass**
die Indikatorschicht zumindest bereichsweise eine Signalfarbe aufweist.

7. Hitzeschildelement nach einem der Ansprüche 1 bis 6,
**dadurch gekennzeichnet, dass**
die Indikatorschicht mindestens ein Indikatorobjekt (54) umfasst, wobei sich die Indikatorobjekte optisch von dem oberhalb der Indikatorschicht in Richtung Heißseite befindenden Grundkörpermaterial unterscheiden.

8. Hitzeschildelement nach Anspruch 7,
**dadurch gekennzeichnet, dass**
die Indikatorobjekte (54) aus einem metallischen Material bestehen.

9. Hitzeschildelement nach einem der Ansprüche 1 bis 8,
**dadurch gekennzeichnet, dass**
die Indikatorschicht (52) mehrere Schichten (58,60) umfasst, wobei die mehreren Schichten sich optisch voneinander unterscheiden.

10. Hitzeschild (24) für eine Gasturbine (1) mit einer Anzahl an Hitzeschildelementen (28,48,56), welche unter Belassung von Dehnspalten im Wesentlichen flächendeckend und lösbar an einer Tragstruktur (26) der Gasturbine befestigbar sind,
**dadurch gekennzeichnet, dass**
mindestens ein Hitzeschildelement nach einem der Ansprüche 1 bis 9 ausgebildet ist.

11. Brennkammer (10) für eine Gasturbine, welche zum Schutz vor Heißgasen mindestens bereichsweise mit einem Hitzeschild (24) ausgekleidet ist,
**dadurch gekennzeichnet, dass**
der Hitzeschild nach Anspruch 10 ausgebildet ist.

12. Gasturbine (1) mit mindestens einer Brennkammer (10),
**dadurch gekennzeichnet, dass**
mindestens eine Brennkammer nach Anspruch 11 ausgebildet ist.

13. Wartungsmethode zur Wartung einer Brennkammer (10) einer Gasturbine (1), wobei die Brennkammer nach Anspruch 11 ausgebildet ist,
**dadurch gekennzeichnet, dass**
der Austausch mindestens eines nach einem der Ansprüche 1 bis 9 ausgebildeten Hitzeschildelementes (28,48,56) in einem Zustand des Hitzeschildelementes erfolgt, in welchem der betriebsbedingte Abtrag des Hitzeschildelements die Indikatorschicht (52) mindestens bereichsweise freigelegt hat oder hatte.
